# EUROPEAN PATENT APPLICATION

(11) **EP 3 054 178 A1**
(43) Date of publication of application: **10.08.2016**
(21) Application number: 14849965.0
(22) Date of filing: 28.09.2014
(51) Int. Cl.: F16B 47/00

(54) **SUCTION PLATE AND SUCTION PLATE DEVICE HAVING SUCTION PLATE**

(30) Priority: 30.09.2013 CN 201310460592; 30.09.2013 CN 201320614927 U
(71) Applicant: Anho Houseware Co., Ltd. Jiangmen, Jiangmen, Guangdong 529020 (CN)
(72) Inventor: ZHANG, Decai, Guangdong 529020 (CN)
(74) Representative: advotec.
(86) International application number: PCT/CN2014/087639
(87) International publication number: WO 2015/043516

(57) **Abstract**

Disclosed are a suction plate and a suction plate device having suction plate. The suction plate (1) comprises a disc-shaped main body made of a flexible material and a supporting connector (2) connected to the main body and made of an inflexible material, wherein a side wall of the supporting connector (2) is provided with an external thread, an edge of the main body (11) is provided with a first suction structure, a side edge of the longitudinal cross section of the first suction structure is a stepped shape with at least three steps, and a top part of the first suction structure is higher than a central region of a top part of the main body. After the suction plate (1) is applied in a suction plate device, the supporting connector (2) provided is pulled upwards by a relevant component of the suction plate device, causing a central position of the suction plate to be taken upwards, the first suction structure provided matches and is compressed with a relevant component of the suction plate device, forming a vacuum, and providing secure suction.

## Description

This application claims the benefit of priorities to Chinese Patent Applications No. 201310460592.0 and No. 201320614927.5, both titled "SUCTION CUP AND SUCTION CUP DEVICE HAVING THE SAME" and filed with the Chinese State Intellectual Property Office on September 30, 2013, the entire disclosures of which are incorporated herein by reference.

### FIELD

The present application relates to the technical filed of suction cups, in particular to a suction cup having a simple structure and a strong suction force and a suction cup device having the suction cup.

### BACKGROUND

In daily life and work, it is frequently required to hang an article on the surface of a wall or an object, and in this case, a hanging medium is needed. Common hanging media include a hook and a suction cup structure. The hook has a bonding layer on the back and uses the bonding layer to bond with the surface of the wall or the object. However, the hook has a big bonding force, and when the hook is removed, marks of binders will be left on the surface of the wall or the object. The suction cup structure uses extrusion to form a vacuum, to realize the suction effect. A suction force of the suction cup structure is stronger than that of the hook and will not leave marks on the surface of the wall or the object. At present, most of the suction cup structures have complicated structures, which may cause a high manufacturing cost and inconvenience to the users.

Therefore, a technical issue to be solved in the art is to improve the conventional technology to provide a suction cup which can have a strong suction force with a simple structure and have a strong suction force when being used in the suction cup structure.

### SUMMARY

In view of this, an object of the present application is to provide a suction cup which can be applied in a suction cup device to allow the suction cup device to realize a strong suction force with a simple structure. Based on this, a suction cup device is further provided by the present application.

To solve the above technical issues, the technical solution of the present application is as follows.

A suction cup includes a main body made of flexible material and having a disk shape, and a supporting and connecting assembly connected to the main body and made of hard material. A side wall of the supporting and connecting assembly is provided with external threads, an edge of the main body is provided with a first suction structure, a side of a longitudinal section of the first suction structure is of a stepped shape having at least three levels of steps, and a top of the first suction structure is higher than a center area of a top of the main body.

Preferably, the supporting and connecting assembly includes a supporting seat and a supporting rod which are connected together, the supporting seat is sealed in the main body, the supporting rod extends upwardly to an outside of the main body, and the external threads are provided on a side wall of the supporting rod.

Preferably, the center area of the top of the main body is provided with a boss and an annular groove surrounding the boss, and the supporting rod runs through the boss and extends outwards to the outside of the main body.

A suction cup device according to the present application includes a suction cup, a tightening cap and a switching knob. The suction cup includes a main body made of flexible material and having a disk shape, and a supporting and connecting assembly connected to the main body and made of hard material. A side wall of the supporting and connecting assembly is provided with external threads, an edge of the main body is provided with a first suction structure, a side of a longitudinal section of the first suction structure is of a stepped shape having at least three levels of steps, and a top of the first suction structure is higher than a center area of a top of the main body. The tightening cap is made of flexible material and includes a cap plate and a side plate surrounding an edge of the cap plate and extending downward. The side plate is provided with a second suction structure configured to cooperate with the first suction structure of the suction cup. The switching knob is located on the tightening cap, a lower portion of the switching knob is provided with a threaded hole, internal threads configured to cooperate with the external threads are provided in the threaded hole, and a partial area at a lower surface of the switching knob is in contact with an upper surface of the tightening cap.

Preferably, the switching knob includes a top plate and a side coaming provided at an edge of the top plate, a lower surface of the top plate is provided with a connecting column, the threaded hole is provided in the connecting column in a direction of a longitudinal axis of the connecting column, an outer side wall of the connecting column is provided with a supporting sleeve, a lower surface of the supporting sleeve is in contact with an upper surface of the tightening cap, and a lower surface of the side coaming is in contact with the upper surface of the tightening cap.

Preferably, the cap plate of the tightening cap is provided with a through hole, and the connecting column runs through the through hole.

Preferably, a lower surface of the cap plate of the tightening cap is provided with a protrusion portion, and the through hole runs through the protrusion portion.

Preferably, the supporting and connecting assembly includes a supporting seat and a supporting rod which are connected together, the supporting seat is sealed in the main body, the supporting rod extends upwardly to an outside of the main body and extends into the threaded hole, and the external threads are provided on a side wall of the supporting rod.

Preferably, the center area of the top of the main body is provided with a boss and an annular groove surrounding the boss, and the supporting rod runs through the boss and extends outwards to the outside of the main body.

Preferably, the side plate of the tightening cap has one end connected to the cap plate and another end inclining downward and outward, the second suction structure is provided at a lower end of the side plate, an outer side surface of the second suction structure expands outward from an outer side surface of an upper portion of the side plate, a pressing strip protruding downward is provided on an inner side wall of the second suction structure, and the pressing strip is located in an inside of the top of the first suction structure and is in contact with an upper surface of the main body.

Compared with the conventional technology, the suction cup in the present application includes a main body made of flexible material and having a disk shape, and a supporting and connecting assembly connected to the main body and made of hard material. A side wall of the supporting and connecting assembly is provided with external threads, an edge of the main body is provided with a first suction structure, a side of a longitudinal section of the first suction structure is of a stepped shape having at least three levels of steps, and a top of the first suction structure is higher than a center area of a top of the main body. Therefore, in the case that the suction cup is applied in the suction cup device, the supporting and connecting assembly is pulled upward by a relevant assembly of the suction cup device, which tightens a center of the suction cup upward and the first suction structure cooperates with the relevant assembly of the suction cup device and is pressed tightly to the relevant assembly of the suction cup device, thereby forming a vacuum and realizing the suction effect. The suction cup device has a simple structure, a strong suction force and a reliable suction effect.

### BRIEF DESCRIPTION OF THE DRAWINGS

Figure 1 is a perspective view of a suction cup according to an embodiment of the present application;
Figure 2 is a front view of the suction cup shown in Figure 1;
Figure 3 is a sectional view of the suction cup in Figure 2 taken along line A-A;
Figure 4 is an exploded view showing the structure of a suction cup device according to an embodiment of the present application;
Figure 5 is a top view of the suction cup device shown in Figure 4;
Figure 6 is a sectional view of the suction cup device in Figure 4 taken along line B-B;
Figure 7 is a front view of a tightening cap in Figure 4;
Figure 8 is sectional view of the tightening cap in Figure 7 taken along line C-C;
Figure 9 is a schematic view showing the suction cup device in Figure 4 in a sucking state; and
Figure 10 is a schematic view showing the suction cup device in Figure 4 in a loosened state.

### DETAILED DESCRIPTION OF THE EMBODIMENTS

For those skilled in the art to better understand the technical solutions of the present application, the present application is described in detail in conjunction with the following embodiments.

### Embodiment of Suction Cup

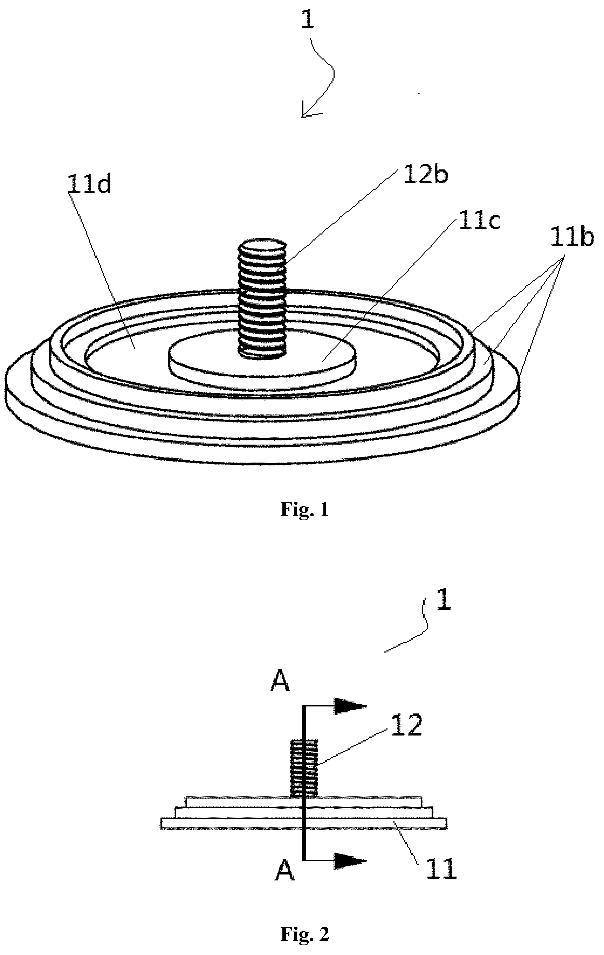

Referring to Figures 1 to 3, a suction cup 1 according to this embodiment includes a main body 11 of a circular disk shape and a connecting and supporting assembly 12. The main body 11 includes an intermediate plate 11a, a first suction structure 11b arranged at an edge of the intermediate plate 11a, a boss 11c arranged at a center area of an upper surface of the intermediate plate 11a, and an annular groove 11d arranged around the boss 11c. The connecting and supporting rod 12 includes a supporting seat 12a and a supporting rod 12b which are connected together. A side wall of the supporting rod 12b is provided with external threads. The supporting seat 12a is sealed in the intermediate plate 11a, and the supporting rod 12b runs through the boss 11b and extends outwards to the outside. The first suction structure 11b is of a structure having three steps, and includes three levels of bosses, and the diameters of the three levels of bosses are reduced progressively from bottom to top. A top of the first suction structure 11b is higher than a top of the intermediate plate 11a.

In this embodiment, the main body 11 of the suction cup is made of flexible material, for example plastic, and the connecting and supporting assembly 12 is made of hard material, for example iron.

In this embodiment, the first suction structure has a three-level structure, and in other embodiments, the first suction structure may be provided with more steps, such as having four levels of steps or five levels of steps.

### Embodiment of Sucking Disk Device

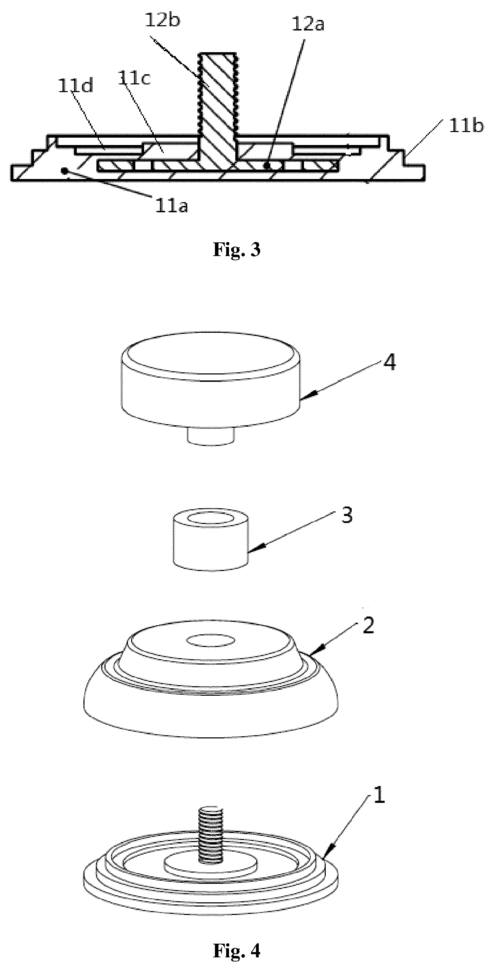

Referring to Figures 4 to 10, the suction cup device according to this embodiment includes a suction cup 1, a tightening cap 2, a supporting sleeve 3 and a switching knob 4. The tightening cap 2 is located on the suction cup 1, the switching knob 4 is located on the tightening cap 2, and the supporting sleeve 3 is located between the tightening cap 2 and the switching knob 4.

The structure of the suction cup 1 can be referred to the foregoing embodiments, which will not be described herein again.

The tightening cap 2 includes a cap plate 21, and a side plate 22 surrounding an edge of the cap plate 11 and extending downward. An upper end of the side plate 22 is connected to the cap plate 21, an upper portion of the side plate 22 inclines outward, a lower portion of the side plate 22 is provided with a second suction structure 22a which is configured to cooperate with the first suction structure. An outer side wall of the second suction structure 22a is expanded outward from an outer side wall of the upper portion of the side plate, and an inner side wall of the second suction structure is provided with a pressing strip 22b protruding downward. When the second suction structure cooperates with the first suction structure, the pressing strip 22b extends into an inside of the first suction structure. A protrusion portion 23 is provided in a center area of a lower surface of the cap plate 21, a through hole 21a is further provided in the center area of the cap plate 21, and the through hole 21a runs through the protrusion portion 23.

The switching knob 4 includes a top plate 41 and a side coaming 42 provided at an edge of the top plate 41. A lower surface of the top plate 41 is provided with a connecting column 43, and a threaded hole 43a is provided in the connecting column 43 in a direction of a longitudinal axis of the connecting column 43. An upper end of the threaded hole 43a is not in communication with the outside, a lower end of the threaded hole 43a is in communication with the outside, and a supporting rod 12 of the suction cup 1 extends into the threaded hole 43a.

The supporting sleeve 3 is sleeved on an outer side wall of the connecting column 43, a lower surface of the supporting sleeve 3 is in contact with an upper surface of the tightening cap 2, and a lower surface of the side coaming 42 is in contact with the upper surface of the tightening cap 2.

In this embodiment, the tightening cap 2 is made of flexible material, for example plastic.

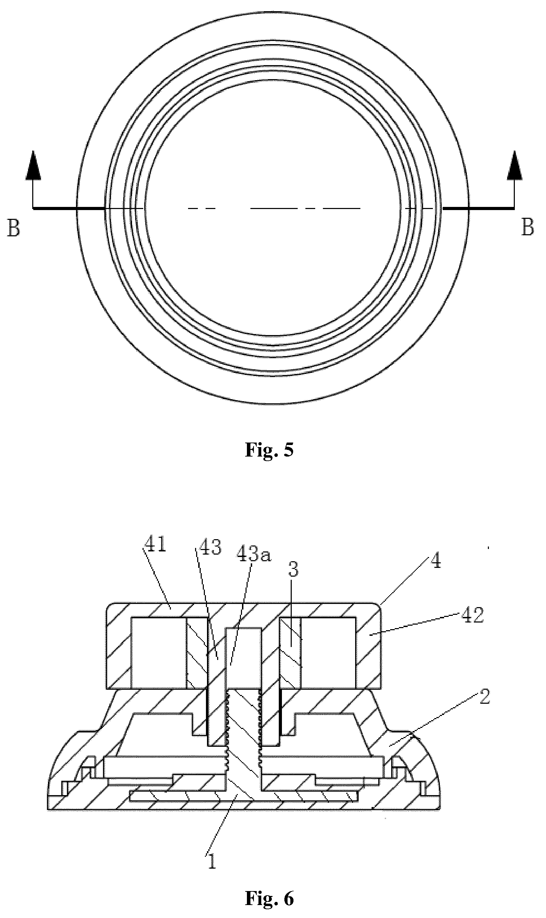

Referring to Figures 6, 9 and 10, the working process of the suction cup device according to the embodiment is described hereinafter.

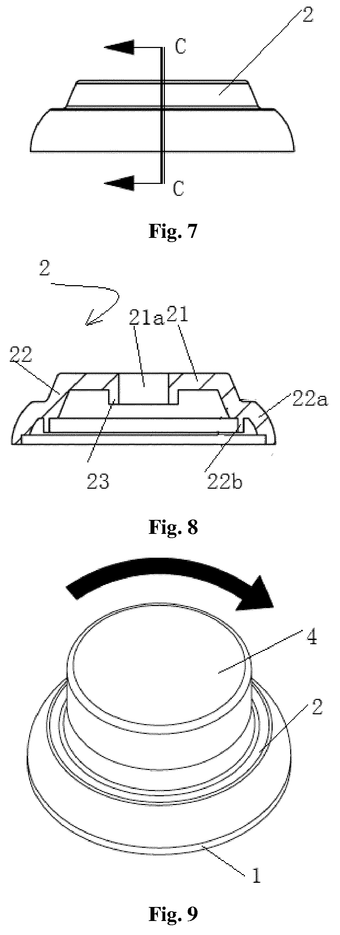

As shown in Figure 9, the switching knob 4 is turned right in a direction indicated by an arrow, the supporting rod 12b of the suction cup 1 is pulled, which tightens the center area of the suction cup 1 upward and presses the tightening cap 2 downward in the meantime. In this case, the suction cup device begins to suck. As the tightening cap 2 is pressed downward progressively, the cooperation intensity between the first and second suction structures are accordingly increased, and the first and second suction structures are bound more tightly, thereby ensuring that a suction surface between the suction cup device and a wall or an object has enough contact area when the suction cup device is in a sucking state, to allow the suction cup device to be hard to fall off.

On the basis of keeping enough contact area, the switching knob is continually turned right to continue to pull the center of the suction cup upward, which increases the vacuum degree immediately, thereby increasing the effective suction time of the suction cup device.

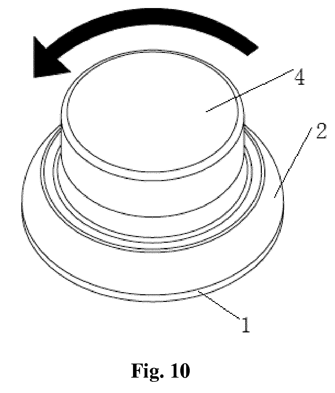

Referring to Figure 10, when the switching knob is turned left in a direction indicated by an arrow, the suction effect is removed to disengage the suction cup device from the suction surface.

Based on the above embodiments, the suction cup device of the present application can conveniently realize vacuum suction with a simple structure, thereby simplifying the manufacture process of the suction cup device and decreasing the cost.

The above descriptions are only preferable embodiments of the present application. It should be noted that the preferable embodiments should not be interpreted as limitation to the present application. The scope of the present application is defined by the claims. For those persons skilled in the art, a few modifications and improvements may be made to the present application without departing from the spirit and scope of the present application, and those modifications and improvements should also be deemed to fall into the scope of the present application.

## Claims

1. A suction cup, comprising a main body made of flexible material and having a disk shape, and a supporting and connecting assembly connected to the main body and made of hard material, wherein a side wall of the supporting and connecting assembly is provided with external threads, an edge of the main body is provided with a first suction structure, a side of a longitudinal section of the first suction structure is of a stepped shape having at least three levels of steps, and a top of the first suction structure is higher than a center area of a top of the main body.

2. The suction cup according to claim 1, wherein the supporting and connecting assembly comprises a supporting seat and a supporting rod which are connected together, the supporting seat is sealed in the main body, the supporting rod extends upwardly to an outside of the main body, and the external threads are provided on a side wall of the supporting rod.

3. The suction cup according to claim 2, wherein the center area of the top of the main body is provided with a boss and an annular groove surrounding the boss, and the supporting rod runs through the boss and extends outwards to the outside of the main body.

4. A suction cup device, comprising:
a suction cup comprising a main body made of flexible material and having a disk shape, and a supporting and connecting assembly connected to the main body and made of hard material, wherein a side wall of the supporting and connecting assembly is provided with external threads, an edge of the main body is provided with a first suction structure, a side of a longitudinal section of the first suction structure is of a stepped shape having at least three levels of steps, and a top of the first suction structure is higher than a center area of a top of the main body;
a tightening cap made of flexible material and comprising a cap plate and a side plate surrounding an edge of the cap plate and extending downward, wherein the side plate is provided with a second suction structure configured to cooperate with the first suction structure of the suction cup; and
a switching knob located on the tightening cap, wherein a lower portion of the switching knob is provided with a threaded hole, internal threads configured to cooperate with the external threads are provided in the threaded hole, and a partial area at a lower surface of the switching knob is in contact with an upper surface of the tightening cap.

5. The suction cup device according to claim 4, wherein the switching knob comprises a top plate and a side coaming provided at an edge of the top plate, a lower surface of the top plate is provided with a connecting column, the threaded hole is provided in the connecting column in a direction of a longitudinal axis of the connecting column, an outer side wall of the connecting column is provided with a supporting sleeve, a lower surface of the supporting sleeve is in contact with an upper surface of the tightening cap, and a lower surface of the side coaming is in contact with the upper surface of the tightening cap.

6. The suction cup device according to claim 5, wherein the cap plate of the tightening cap is provided with a through hole, and the connecting column runs through the through hole.

7. The suction cup device according to claim 6, wherein a lower surface of the cap plate of the tightening cap is provided with a protrusion portion, and the through hole runs through the protrusion portion.

8. The suction cup device according to claim 4, wherein the supporting and connecting assembly comprises a supporting seat and a supporting rod which are connected together, the supporting seat is sealed in the main body, the supporting rod extends upwardly to an outside of the main body and extends into the threaded hole, and the external threads are provided on a side wall of the supporting rod.

9. The suction cup device according to claim 8, wherein the center area of the top of main body is provided with a boss and an annular groove surrounding the boss, and the supporting rod runs through the boss and extends outwards to the outside of the main body.

10. The suction cup device according to claim 4, wherein the side plate of the tightening cap has one end connected to the cap plate and another end inclining downward and outward, the second suction structure is provided at a lower end of the side plate, an outer side surface of the second suction structure expands outward from an outer side surface of an upper portion of the side plate, a pressing strip protruding downward is provided on an inner side wall of the second suction structure, and the pressing strip is located in an inside of the top of the first suction structure and is in contact with an upper surface of the main body.
